# EUROPEAN PATENT SPECIFICATION

(11) **EP 4 109 287 B1**
(45) Date of publication and mention of the grant of the patent: **26.11.2025**
(21) Application number: 22180812.4
(22) Date of filing: 23.06.2022
(51) Int. Cl.: G06F 16/176, G06F 16/28, G06F 16/21

(54) **A COLLABORATIVE SYSTEM AND METHOD FOR MULTI-USER DATA MANAGEMENT**
KOLLABORATIVES SYSTEM UND VERFAHREN ZUR MEHRBENUTZERDATENVERWALTUNG
SYSTÈME ET PROCÉDÉ COLLABORATIFS DE GESTION DE DONNÉES MULTI-UTILISATEURS

(30) Priority: 23.06.2021 BE 202105490
(43) Date of publication of application: 28.12.2022
(73) Proprietor: Loctax NV, 9000 Gent (BE)
(72) Inventor: VAN REMORTELE, Bart, 9000 Gent (BE); VAN DER WEIJDE, Onne, 9000 Gent (BE)
(74) Representative: V.O.

(56) References cited:
- US-A1- 2021 097 061
- ANONYMOUS: "Data Concurrency and Consistency", 7 May 2021 (2021-05-07), XP055899701, Retrieved from the Internet <URL:https://web.archive.org/web/20210507035346/https://docs.oracle.com/database/121/CNCPT/consist.htm> [retrieved on 20220310]
- AULT MIKE ET AL: "Concurrent Database Access - Data Concurrency and Data Consistency", 21 July 2020 (2020-07-21), XP055899674, Retrieved from the Internet <URL:https://web.archive.org/web/20200721044706/http://www.dba-oracle.com/real_application_clusters_rac_grid/concurrent_database.html> [retrieved on 20220310]

## Description

### FIELD OF THE INVENTION

The invention relates to a collaborative system and computer implemented method for multi-user data management. The invention also relates to providing a collaborative system with multi-user data management. Furthermore, the invention relates to a computer program product and a device.

### BACKGROUND TO THE INVENTION

Various content management systems (CMS) exist. Such systems are typically configured to manage the creation and modification of digital content or data. A CMS may be for instance used for web content management or enterprise content management (ECM). Such enterprise content management can support multiple users in a collaborative environment by for instance integrating document management, digital asset management, and record retention.

Currently collaborative systems may include platforms, such as Sharepoint and Dropbox, to enable collaboration. In this way, multiple users can simultaneously work in the same files. Typically, the data is stored in a highly distributed (fragmented) heterogenous and unstructured way. Manually updating of data stored across different sources is notoriously prone to errors and inaccuracies. Moreover, it is not always clear which data files contain the most up-to-date information. This significantly limits transparency of data management (e.g. tax management, data governance, etc.).

The need for remote collaboration is becoming increasingly more important. However, these systems often have difficulties with efficient multi-user data management, especially when a large number of users and teams with multiple users work together. This does not only have a detrimental effect on the work efficiency, but may also significantly increase the risk of errors in data management. Collecting the needed information or data can take a lot of time. There is a desire to limit delays in gathering data or information in order to prevent outdated versions which could result in data conflicts. Furthermore, data inaccuracy can lead to noncompliance, which can in turn result in significant financial costs for companies.

Document "Anonymous: "Data Concurrency and Consistency", 7 May 2021 (2021-05-07), XP055899701, Retrieved from the Internet: URL:https://web.archive.org/web/20210507035346/ https://docs.oracle.com/ database/1211CNCPT/consist.htm [retrieved on 2022-03-10]" describes prior art.

There is a need to significantly improve work efficiency and accuracy in collaborative systems for multi-user data management.

### SUMMARY OF THE INVENTION

It is an object of the invention to provide for a method and a system that obviates at least one of the above-mentioned drawbacks.

Additionally or alternatively, it is an object of the invention to provide for an improved system and method for multi-user collaboration in data management.

Additionally or alternatively, it is an object of the invention to provide for a collaborative system with improved efficiency in multi-user data management.

Additionally or alternatively, it is an object of the invention to provide for a multi-user collaborative system with reduced risk of errors or conflicts in data management.

Additionally or alternatively, it is an object of the invention to provide for improved collaboration in data-management on a relational database.

Thereto, the invention provides for a collaborative system for multi-user data management, the system comprising: a relational database having a plurality of data points; a communication interface configured to allow users to query the relational database; and a version control unit configured to keep track of successive historic versions of each data point of the plurality of data points in the relational database.

The system can provide a platform which enables collaborative data management for a plurality of users. The users may for instance collaborate in subgroups or teams. Advantageously, a more efficient management of data can be achieved. The communication interface may be configured to provide for an interactive collaborative platform which makes data management more efficient and transparent.

According to the invention, the version control unit tracks historic versions of individual data points in the relational database, instead of tracking versions of entire datasets (e.g. files such as text files). Hence, it is not needed to pull an entire set of files, even though only a subset of data might be required. When a large number of changes have been made to the repository, frequent pulls need to be done to stay up to date with the master branch, even though most of these changes are not relevant to the user. This affects the overall performance of the system. This technical problem has been overcome by applying version control at the level of data points in the relational database. In a traditional version control system, this issue is solved by splitting the repository or csv file up into different repositories and csv files, respectively. However, this is not desirable on relational databases.

Optionally, each data point is a single row of a table in the relational database.

The version controlled data may be rows in a database. The data can be pulled from a centralized database by querying said centralized database. The requested data (cf. resulting from pull action) does not have to include the entire dataset, instead only a part of the data which is needed can be pulled from the centralized database. The data does not have to be stored locally. Instead, the data can be displayed in some view in an application, for instance a web application (cf. cloud application), requiring only a small subset of the data which is re-fetched (pulled) after the view is updated or refreshed. This provides a highly efficient version control. Advantageously, the data related to version control does not have to be stored on the users device, which would be a big security risk when it contains sensitive data. In addition, since the data is not stored on the user side, installation of additional software is not required.

Optionally, the version control unit is a centralized version control unit. The centralized version control unit can efficiently track changes in the data stored in the relational database.

The centralized version control system can provide significant advantages. Decentralized (distributed) version control systems require a (decentralized) local staging area where changes are staged before being pushed to a central server. According to the invention, the users are not required to download and install an app on their local device for making changes to the data before pushing it to the server. Hence, according to the invention, a centralized web app (e.g. cloud based) can be provided for users to make changes to data, wherein any changes made are directly pushed to the central server.

There are major disadvantages associated with using (decentralized) local staging areas for data management. For instance, decentralized/distributed version control requires all data to be stored on the local staging area, which is not ideal for highly sensitive corporate tax data. In contrast, centralized version control allows one to more transparently manage and rightly control who gets access to what data. Additionally, apps are typically operating system specific and are significantly more expensive to develop and maintain (updating), making them more prone to bugs and errors. Furthermore, often users have strict regulations on which apps they are allowed to download on their company devices, while a web app or cloud app only requires a web browser, not requiring administration rights for installing the app.

The different users or teams of users can easily access, edit and/or review the most recent data related to data management, while simultaneously keeping track of the history of changes. The version control unit may be configured to provide details on what data in the relational database has been changed, when the data in the relational database has been changed, by whom the data in the relational database has been changed and optionally why the data in the relational database has been changed (cf. comments). This is can provide significant advantages for various applications, such as for instance tax project management, legal-organizational-charts (LOC) management, etc. as it ensures full visibility of previous versions and changes made, allowing users or teams of users to fully understand why, how, and when particular decisions were made, i.e. the historic reasoning behind changing data.

The system can better guarantee data accuracy. Any change made to the data in the relational database is reviewed and approved by the user(s) or team(s) of users responsible for the project. This review ensures data quality.

The communication interface may be configured to provide project management and collaboration features which enable users or team members to communicate, comment, and contribute to specific tasks with access to information in real time.

Known version controlled data systems apply version control on 'flat files', i.e. type of database that stores data in a plain text format (e.g. source code (cf. Git)). Contrary to such systems, the system according to the invention implements the concept of version control on relational databases. Applying the technical backbone of Git version control to data in general, for example to tax-related data in a database, is not possible since Git is focused on code management. Code differs from data in significant ways. A codebase is in fact a hierarchy of files and directories which live on a file system. Changes are modelled as the addition or subtraction of lines of text to these files. Database, tables and rows do not offer the same navigation and addressing as file systems. The complexity cannot be reduced to the same general unit as files: a line of text. Given that a database can be many times larger than even the biggest code-base, the fineness and granularity of differences is an important performance limitation on the application of version control on data.

Known systems such as SQL Source Control may work only on database schema changes not on the actual data stored in the tables. Additionally, known systems such as Perforce Helix may aggregate multiple version controlled projects together to create a single source of truth. It does not provide version control for a project by itself. Furthermore, it uses Git to version control the project, which is decentralized/distributed, and it is focused on development (e.g. code, wireframes, etc.) not data in a relational database.

Optionally, the version control unit is configured to store the historic versions of each data point of the plurality of data points in said relational database, wherein metadata is associated to each historic version, the meta data including at least a user identification, a timestamp, and a parent version from which the historic version was created.

Optionally, the historic versions of each data point of the plurality of data points stored in the relational database are queryable.

Advantageously, the data points can remain queryable, even in the context of the history of the data points being stored in the relational database. If a user changes certain data points in the database, then the different versions of the data points (evolution thereof) can easily be traced. The users can easily query the centralized relational database.

Optionally, the version control unit is configured to support parallel workflows with a plurality of version branches.

A branching operation may involve a user branching of a version branch, which allows the user to make changes without modifying the original branch.

Once a branch has been created, the data can be modified. The commit operation, e.g. triggered by a commit command using the communication interface, is used to save and apply changes made by the user to the master data

In order for the data in the relational database to be of sufficient quality (i.e. to enable contemporaneous documentation), any of the following commit metadata may be captured for each commit: author who made the change, message explaining the reason of the change, timestamp indicating when the change took place and/or preceding version(s) which the new version will succeed, which can be called 'commit reference'. It will be appreciated that other metadata may also be added.

Optionally, the communication interface is configured to provide isolated sandbox environments for carrying out changes to at least one data point, wherein each isolated sandbox environment is associated to one version branch.

Advantageous, the invention provides for a collaborative environment where all data points of an existing structure may be present, and where users are allowed to make adjustments to the existing structure in a sandbox environment. The version control unit enables to build different scenarios of adjustments to the data point of the existing structure in parallel, i.e. by allowing the creation of version branching. When a certain branch (i.e. certain scenario in the sandbox environment) is agreed upon, that branch can be combined/merged with the main branch. The master (i.e. single source of truth) is updated with the changes made in the chosen scenario. In this way, the multiple users are allowed to work together on complex changes of the data points in the structure.

Optionally, the version control unit is configured to allow concurrent commits on the same branch. When a plurality of users collaborate on projects in real time, they may work together/simultaneously on the same branch. Thus, it can happen that person A makes a change at the same time as person B on the same branch. In a decentralized version control system, this ends in a conflict.

Concurrent changes may result in one of two possible outcomes. In a first potential outcome, the user A made a change (Va) slightly faster than person B (Vb) to the current active version (V1). The system will pick this up as a linear change (i.e.. V1 → Va → Vb) resulting in both user A and B to have the version of user B as the current active version. In a second potential outcome, the user A made a change (Va) at the exact same time as person B (Vb) to the current active version (V1). The version control unit of the collaborative system is configured to pick this up as a branched change (i.e. V1 → Va + V1 → Vb) with either Va or Vb as the current active version. However, both such outcomes are undesirable. The control version unit is configured to detect concurrent changes and show an error message to the user who attempted the last commit. In some examples, this is performed by locking techniques that prevent the version control system from persisting the later version in the database, e.g. pessimistic and optimistic locking. Furthermore, the communication interface may implement a user interface to handle locking errors. Such locking technique allows to effectively avoid conflicts by the centralized version control unit.

History within one branch can be tracked by the version control unit. A so called 'point in time history' implementation can be employed for tracing history within a single branch. The version control unit may be configured to recursively fetch the pointer commit of a branch and recursively fetch the related reference commit, until it reaches the end of the history or a certain timestamp. In some examples, query times can be improved by indexing columns.

If there is a conflict in merging two branches, the problem is to be immediately resolved. It may not be feasible to block a branch for every user until the problem is resolved. Therefore, the version control unit may be configured to immediately indicate the conflict to the user and give the user the possibility to make an adjustment or cancel the merging.

Optionally, the version control unit is configured to detect changes between version branches.

Optionally, the version control unit is configured to detect changes between branches based on hashing. The hash of each version may be stored.

Optionally, the version control unit is configured to create a data model for relocating versions from commits to its own model. In this way a more efficient storage of the versions can be obtained, and hence the required storage capacity needed by the version control unit may be reduced.

Optionally, the version control unit is configured to detect changes to data points in one or more higher level branches, and automatically apply the changes to the data points in the one or more higher level branches to data points in one or more lower level branches.

A branch can pull in changes from the master branch. In this way, advantageously, potential conflicts can be avoided when the branch is merged with the master branch in the future. Data inconsistency is prevented effectively by allowing the data to move in two directions between the branches. This is particularly very interesting since for some applications the projects can take a long time (e.g. a branch can be open before being merged for more than 1 year).

Optionally, the version control unit is configured to permit merging of version branches together.

The version control unit provides the users the ability to branch and merge different versions of data points in the relational database. A merging operation may involve a user merging a version branch with another version branch, such that all changes are now also on the latter branch.

The version control unit may be configured to capture all the performed actions, and then if desired merge the consequence of the actions with the centralized relational database. All versions/branches may be maintained in the same relational database. Advantageously, this provides the users the possibility to not only query the current state, but also determine how the current state is obtained as a result of changes to data points. The version control unit provides insights with regard to changes to data points and what has resulted in those changes, e.g. the particular branch associated with a project with a specific name. Additional meta information associated to changes of data points can be captured by the version control unit.

The version control unit may be configured to create a history tree for each data point, wherein the history tree may have a path that has been taken to arrive at a certain version of the data point. The nodes of the history tree and the references to build the tree may be stored in the relational database. Labels may be associated with the nodes of the history tree where the history tree branches off. The common ancestor can be determined if two branches need to be merged. The version control unit may determine which data has been changed and whether an automatic merge is possible, i.e. whether or not there is a conflict.

Optionally, the version control unit is configured to perform a validity check when a merge between version branches is initiated, wherein the version control unit is configured to check whether the transition to a merged branch is allowable.

The version control unit may be configured to provide conflict detection and resolution. The version control unit may be configured to detect potential merge conflicts and perform actions to try to (automatically) resolve them. If the detected conflict is not automatically resolvable, it is possible to ask for manual actions from the user via the communication interface. A reverting operation may involve a user reverting a commit made in the past. Hence, the previous changes can be undone.

Optionally, the version control unit is configured to allow users to revert commits. This enables the users to efficiently return to previous states or versions of the data point(s). In some examples, the version control unit is configured to only add new commits and never delete or modify historic commits, even in the case of reverting. With other words, the commits are immutable. In some examples, the version control unit does not store changes, but entire versions.

In some advantageous examples, the version control unit is configured to revert back to a certain point in time. This solution creates a new commit which references that specific version in time. However, this simpler way of reverting means that it is no longer possible to revert a change made by a specific commit while keeping the changes of later commits.

Optionally, the version control unit is configured to associate, for each data point, a history tree containing history information relating to a change path which has been performed in order to arrive at a latest version of the respective data point.

In some advantageous examples, changes are stored besides entire versions. Advantageously, more flexibility can be provided to the users in this way. This may require storage of additional data which might have a detrimental effect on the performance of the system. The version control unit may be configured to recreate versions from changes. For this purpose, all change events may be carried out sequentially, in order to come to the desired version.

Optionally, upon merging of a first version branch into second version branch, the version control unit is configured to identify a common ancestor of the first and second version branches, wherein the common ancestor is a last common version of the first version branch and the second version branch, wherein the version control unit is configured to determine based on the common ancestor which columns of the data point have been changed and whether merging conflicts exists.

Optionally, identifying the common ancestor of a data point in the first and second version branches includes recursively going through the version history of that respective data point, starting from both the version in the first and second branch until a commonly shared version is encountered.

Generally, the common ancestor can be determined by recursively going through the whole history tree, until a point is reached commonly encountered by the two branches to be merged. Two branches may have a plurality of common ancestors. The first common ancestor may be selected for evaluation.

Optionally, the version control unit is configured to trace common ancestors across all version branches.

In this way, the responsiveness of the system may be improved.

Optionally, the plurality of data points are reconfigurable to a selected earlier historic version by means of the version control unit, wherein the version control unit is configured to provide a rollback functionality, wherein in response to a rollback event, the version control unit is configured to perform a rollback transition by restoring at least one data point of the plurality of data points to an earlier version of the historic versions of said at least one data point.

Such rollback functionality may be triggered by the user by means of the communication interface.

The version control unit may be configured to allow users to be able to request the full commit history of a record on a particular branch. In some examples, the complete history is limited to a preselected time period, for instance up to 2 years, up to 5 years, up to 10 years, etc. The user may be able to request the entire commit history tree, including all commits from every branch for a record, for example up to a preselected time period.

In some examples, the version control unit is configured to give each recording in the relational database its own version control representation in order to allow clustering of subsets of records that are used together as a whole. This clustering method can solve the storage-access trade-off problem. The representation of this cluster can be defined on the branch itself. In some cases, the untracked records from other branches (cf. new records) may not be included in this representation and can therefore not be included in change detection and merging. In some examples, this 'untracked records' problem is solved by means of at least one of: partial branching per model type, partial branches of filtered entities, or by letting users manually add records to the branch cluster representation after the branch has been created.

In some advantageous examples, the version control unit is configured to split the reference commit information from the current commit model, to create its own model and a relation to its parent commit. Advantageous, this is a scalable solution.

In some advantageous examples, the current reference commit may be stored in an array format on the commit model. This has the benefit that no separate model needs to be created.

Optionally, the relational database is a centralized database.

The version control unit may be centralized such that no local copies are needed. The actions performed by the user using a user interface of the communication interface may be captured on the centralized server. In this way, pushing of local files to the server is not needed.

Optionally, the relational database is fully centralized providing a single source of truth (SSoT) which is configured to provide a consistent up-to-data view on data being managed. A centralized data version control is provided on the relational database improving the data management projects of different teams at least partially using the same data in the relational database.

The users can have an accurate view on the SSoT at all times. A SSoT is the approach of structuring and storing all data in a single place, ensuring that data locations are linked to the master source and that any propagation from the master source is not duplicated elsewhere in the system. Thanks to the SSoT, the system can always be ready for enabling audits, improving the transparency of the data.

In a relational database model, data structures (including data tables, indexes and views) remain separate from the physical storage, which allows administrators to edit the physical data storage without affecting the logical data structure.

Version control may require different versions of data to be stored. This may directly interfere with unique constraints (e.g. relational integrity constraints), i.e. an important principles of relational databases to maintain data integrity. As a result, versions may not be stored in the same data table. This may be overcome by advantageously storing the entire version on a pointer (instead of only a reference to the version).

Optionally, the version control unit is configured to isolate the parties by using a separate database for each party.

Optionally, the version control unit is configured to keep all data from all of the parties in a single database and add discriminator keys to all tables so that version control unit can filter it to their data only.

Optionally, the version control unit is configured to enable users to delete a branch without impacting the history. A distinction can be made between immutable and resources which can be deleted. Advantageously, this reduces the required storage volumes. For example, when a user creates and modifies a branch, the user needs to decide to either merge the branch or not. The latter case may happen as some brainstorm sessions (cf. sandbox branches) may be purely exploratory and may not result in any change to the data. by enabling users to delete a branch without impacting the history, it can prevent non-operational branches from accumulating over time.

The communication interface or platform may be configured to provide for an interactive environment which is configured to facilitate remote collaboration on data by different teams or parties of users (e.g. managers, consultants, auditors, data engineers, etc.). Advantageously, the system is configured to provide for version control which effectively enables to have an consistent up-to-date and detailed view on the data stored in the relational database, and to efficiently keep a full record of changes which have been made to the data (what has been changed, when, by whom and why).

The collaborative system may be cloud based. Optionally, the collaborative system provides for a software as a service platform.

Optionally, the system is configured to provide for enterprise content management.

According to an aspect, the invention provides for a method for providing a collaborative platform for multi-user data management, the method comprising: providing a relational database having a plurality of data points; providing a communication interface for allowing users to query the relational database; and providing a version control unit for keeping track of successive historic versions of each data point of the plurality of data points in the centralized relational database.

The method can provide for an interactive, collaborative, cloud-based software platform that facilitates the management of data in a relational database. The improved collaborative platform enables users to save significant time in project management.

According to an aspect, the invention provides for a computer program configured for performing, when run on a computing unit, the steps of the method as described herein.

According to an aspect, the invention provides for a device comprising a computing unit including a processor coupled to a memory operable to cause the computing unit to carry out the method as described herein.

The communication interface enables entering, adapting or deleting data in the platform, whilst the version control unit is configured to keep track of all changes and the different versions of the data. Via the communication interface, the users can consult the different tracked versions of the data in the relational database. Optionally, the communication interface allows visualization of the history of versions of data points of the relational database. This allows the user to go back to previous versions of the data. Furthermore, the communication interface may be configured to allow users to add metadata, for example in which it can be motivated or justified why a change to a data point or dataset has been made. Advantageously, as a result a contemporaneous documentation can be provided.

In some examples, the version control unit is configured to retrieve the history and provide it in a timeline representation, for example by means of the communication interface. The history may be represented by a tree of commits. Commits may be branch independent. It is also envisaged that commits may be shared by branches.

According to an aspect, the invention provides for a use of the collaborative system for management of data by multiple users. The use of the system may result in significant cost savings. Additionally, the consistency in the data can be highly improved. As a result, the trust in reporting can also increase.

Multi-user collaboration may concern working together on projects that have a goal and entail the execution of a certain amount of actions on data within a given time span, for example ranging from weeks to months. This way of working is supported by branching. The users are allowed to continue to commit new changes to the branch, while other colleagues can adapt the master without the changes affecting each other. Days or weeks may go by allowing the users to make changes, review and refine their work. All data may be stored on the centralized relational database. Instead of recording each change individually, the version control unit may be configured to map only the changes when the user actually 'submits' them. This submission of a collection of actions performed on the data is known as a commit. The commits may be kept in the repository indefinitely. Thus, when other users perform an update of the repository, the latest committed version can be received.

The system and method can be employed for various applications in which data management is necessary. For instance, collaborative tax management, collaborative data governance, etc. For example, when the system provides for collaborative tax management, besides corporate data, the platform may be equipped with the latest international tax regulations.

An example for which the system can be used is the management of Legal Organizational Charts (LOC). These charts show the owner relationships between legal entities in the corporate family, and contain quantitative information (e.g. percentage of shareholding ownership of a subsidiary), qualitative information (i.e. a required legal form), or combinations of both (i.e. deductions linked up to the amount or registered share capital in case of a liquidation). These can be the basis for most tax-related decisions within multi-entity organizations. Because of a lack of computer implemented systems, LOCs are typically created manually in PowerPoint. The communication interface or the platform according to the invention can be configured to facilitate remote collaboration, thereby improving transparency on and accuracy of all corporate tax data.

The centralized relational database enables improved updating of rules, since the rules can be automatically implemented and made available to the users of the collaborative system. The users may for instance invite particular users (e.g. external party) to collaborate on projects to, for example, ask an external party specialized in particular rules for a particular case to review relevant data related to the project, and adjust the current rules when needed.

For example, the system users can perform exploratory analyses based on the SSoT and the rules and regulations inputted for example by another party (e.g. external party). For the example of tax management, these exploratory analyses aim to quickly estimate the impact of different tax strategy decisions based on a set of 'parameters', e.g. what financial and regulatory consequences are linked to acquiring entity X when considering the following parameters: different countries (applying national tax regulations), financing by different kind of loans, etc.

It will be appreciated that version history can be interpreted as every change which is incrementally captured and users are able to travel back through the data and, for example, roll back to a previous version of their data.

It will be appreciated that branching can be interpreted by an operation in which users can create a copy of the current master data set and start changing this data in a 'brainstorm' (sandbox) environment without impacting other users.

It will be appreciated that merging can be interpreted by an operation in which two versions of the data points are created. When two of these copies (or branches) diverge, the changes can be merged back into the original version by applying multiple algorithms to apply the changes on the original.

The version control unit may be configured to record changes to 'data' in the relational database over time so that its history or historic versions can be mapped, and so that specific previous versions may be recalled later in time. The version control unit is specifically configured to provide version control in a relational database, preferably a centralized relational database. The centralized system may work in a client and server relationship. The repository may be located in one place and may provide access to a plurality of clients. All changes, users, commits, branching, merging and information is sent and received from this central repository.

A commit operation may involve a user adding, creating, updating, deleting data by committing changes. A commit may include information with regard to the user of the commit (cf. author), a commit message indicating a reason why the commit has been made, a timestamp when the commit was made, a reference to the previous commit, and an indication whether this commit is a merge commit or not. The commits themselves may never be altered and/or deleted by any user to guarantee the integrity of the version control.

Although the embodiments of the invention may comprise computer apparatus and processes performed in a computer apparatus, the invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program.

"Optional" or "optionally" means that the subsequently described event or circumstance may or may not occur, and that the description includes instances where said event or circumstance occurs and instances where it does not.

It will be appreciated that any of the aspects, features and options described in view of the system apply equally to the method and the described collaborative platform, computer program product, and the device. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a system;
Fig. 2a, 2b show a schematic diagram of an exemplary version control;
Fig. 3 shows a schematic diagram of an exemplary version control;
Fig. 4 shows a schematic diagram of an exemplary entity relational diagram; and
Fig. 5 shows a schematic diagram of an exemplary version control.

### DETAILED DESCRIPTION

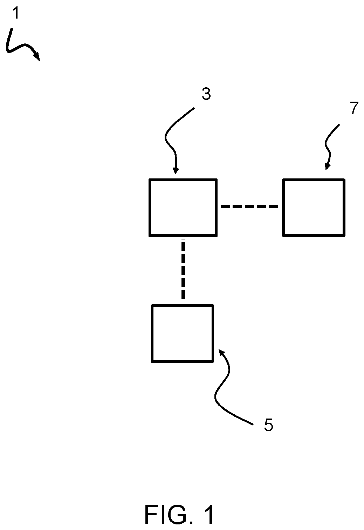

Fig. 1 shows a schematic diagram of an embodiment of a collaborative system 1 for multi-user data management. The system 1 comprising a relational database 3 having a plurality of data points therein. Furthermore, the system 1 is provided with a communication interface 5 configured to allow users to query the relational database 3. The communication interface 5 may for instance include a user interface (UI) and/or an application programming interface (API). The collaborative system 1 further includes a version control unit 7 configured to keep track of successive historic versions of each data point of the plurality of data points in the relational database 3.

The version controlled data management system efficiently improves collaboration between multiple users. Advantageously, the system 1 enables to better keep clear and complete track of changes made to the data. It is no longer necessary to manually update data which is stored across different sources. Hence, errors and inaccuracies can be effectively reduced.

Moreover, the system 1 can help guaranteeing an accurate and consistent up-to-date view on the data. In an advantageous way, the system enables to automatically extract essential and up-to-date information related to collaborative projects.

Single source of truth (SSoT) refers to storing all data, configuration, and other digital assets in a way that everyone can access the most up-to-date data in a common location, anywhere and anytime.

Optionally, the version control unit 7 enables to roll back to a previous version of the data. The system 1 provides for a version control which allows users to branch, commit and merge applied on datasets in the relational database 5. The branching feature enables multiple users working in parallel on projects which are linked to the master data (SSoT). Data version control will also provide the tooling to reinstate previous versions of the data, and will enable setting up dedicated sandbox environments.

The system 1 may be a version controlled content management system (CMS), significantly improving work efficiency and accuracy. Instead of employing a decentralized version control layer, the system is configured to establish a centralized version control architecture.

The version control unit may be configured to provide centralized version control on the relational database. Instead of applying version control on so-called 'flat files', i.e. type of database which stores data in a plain text format, the current invention implements the concept of version control on relational databases. Within flat files, there are no structures for indexing or recognizing relationships between records. In contrast, a relational database is a collection of information that organizes data points with defined relationships. Changing one data point will impact many other data points in the database. The system employs a centralized version control architecture.

The version control unit 7 may be configured to provide branching operations providing users with the ability to deviate from a version and to add a duplicate to it so it can be changed independently of the source version. The users are also able to commit, which includes addition of a timestamp and reference to the previous version in each commit. The system 1 can handle changes to large data volumes, and the version control can be employed in a collaborative way for a large number of users. The version control unit may be configured to support tracking and visualizing history of changes to data in the (centralized) relational database, for example using the communication interface. The communication interface may include an application programming interface. Such an interface may be configured to define calls or requests that can be made.

The version control unit 7 may be configured to handle multiple branches and to enable accurate and efficient merging of branches. Changes between branches may be automatically detected, and the version control unit may be configured to handle automated pull requests to update operational branches. History of the data across branches may be tracked by the version control unit. In some examples, the version control unit is configured to enable merge previews.

The application programming interface of the communication interface may be configured to enable a (web) app to communicate with the version control unit (committing, branching, etc).

Advantageously, the collaborative system can provide for dedicated sandbox environments in which testing can be performed, e.g. brainstorm environment for performing experiments with the data in the relational database. The version control unit may enable collaboration and a SSoT.

A sandbox environment can facilitate collaborative brainstorm sessions. Sandboxes can be considered as a special part of the branching model, they can branch from the master in order to enable estimations based on SSoT, but are not allowed to merge with and affect the master version.

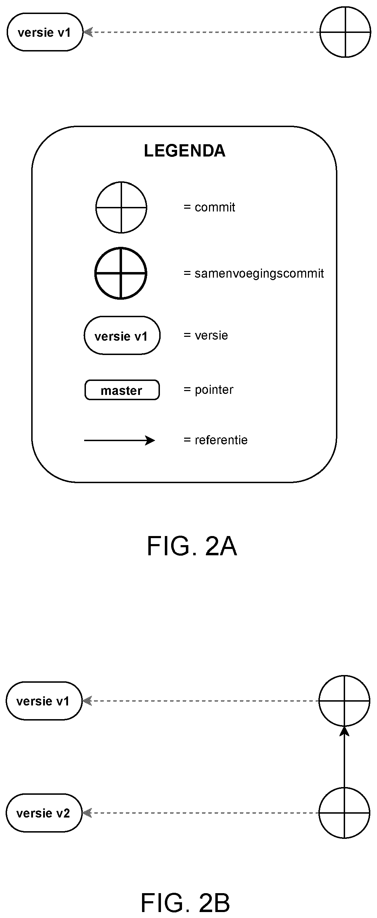

Fig. 2a shows a schematic diagram of an exemplary version control. A new record v1 can be inserted, which can be registered by the version control unit as a commit. The system can insert the record v1 in the version table and can create a commit containing metadata about the insert, for example information with regard to the author (cf. user), message, and timestamp. The commit references the insert v1. Committing can enable linear history within a branch. The data can be inserted by the users via the communication interface.

Fig. 2b shows a schematic diagram of an exemplary version control. The data point stored in the relational database may be updated by a user. If the user wants to update record v1 (this will result in record v2), the control version unit stores record v2 and creates a commit with the relevant metadata (e.g. author, message, timestamp, preceding version) and reference to record v2. In addition, this commit now also references the previous commit, so that a linear commit history is built. By processing updates/inserts in this way, it is possible to keep a linear history of how the record evolved over time with preservation of its context.

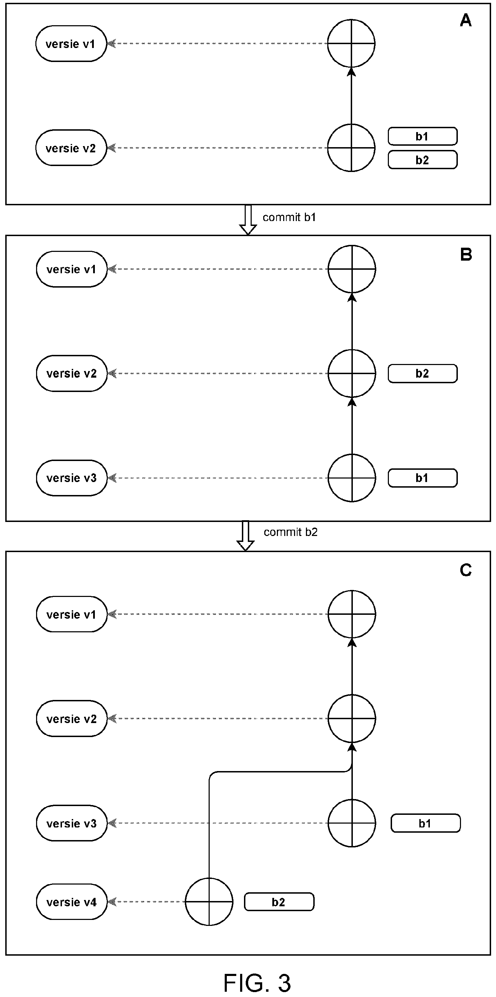

Fig. 3 shows a schematic diagram of an exemplary version control. Multiple users can change data in the relational database by performing committing and branching actions which may lead to non-linear history trees.

Multiple users are allowed to work on the data on the same relational database via the communication interface. The data can thus be changed by multiple users. For example, multiple users may want to work independently (cf. concurrently) on record v1 in the system. Changes made by a user are only applicable to that user, this will create an own history path. This is realized using branching. When a user creates a branch, the system is configured to create a pointer b1, b2, which references the commit where a particular branch is at, in the history tree. In the shown example, panel A shows a situation where two branches b1 and b2 exist.

When a user worked on branch b1 and wants to commit a change, a new version v3 is inserted together with a commit and a reference to the previous commit, but now also the pointer for b1 is moved along to the newly created commit, see panel B. Note that for users on branch b2 nothing changes as they are still at version v2.

When one of the users makes a change to the data, again two versions will exist, see panel C figure. The two versions have branched from the second commit, each creating its own history path. As a result, the commit history is no longer linear but becomes structured as a tree. Advantageously, this feature allows users to work independently on the same relational database, for example on the same or on different projects, without detrimentally interfering with other projects.

When several users work on the same dataset, similar data points may be altered (commit) nearly simultaneously and result in conflicts, that is, the version control system identifies a mismatch and cannot determine which is the correct and authoritative change. In this case, the version control system may be configured to visualize the difference between the conflicting versions, and request an input from the user to make a choice with regard to which data point should be retained. To minimize conflicts while collaborating on the same dataset, the version control unit may be configured to get the latest updates from the repository as frequently as practically possible. This can be performed by means of updates or pull requests.

When the project reaches its end and the user agrees with the result, the branch can be merged with the original data. By merging the branch with the master, the version control tool may attempt to seamlessly integrate (cf. apply) any change made within the branch to the original master data. The version control unit may require merging to be reviewed and approved by the user responsible for the project, e.g. team leader. The user can be appointed to resolve merge conflicts identified by the version control unit of the system.

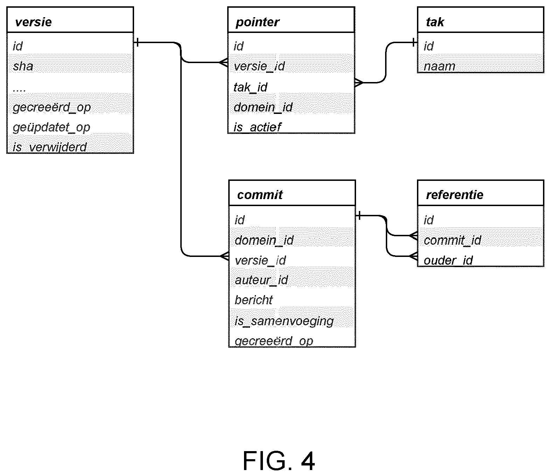

Fig. 4 shows exemplary schematic entity relational diagrams (ERD). The figure illustrates an exemplary visual representation of the relationships of entity sets stored in the relational database. More particularly, the structure (design, architecture) of the data model is illustrated. An entity set is a collection of similar entities, each entity (component of data) is characterized by attributes. In order to support version control, the ERD will include different tables (version, pointer, commit, branch, reference).

The system can be used for data project management for different applications. For example, the data may be related to an entire multinational company structure (data points around company and data points around relations between companies, for example including i.a. addresses of the associated companies, turnover, directors that change, shareholders that change, companies that disappear, companies that are merged, other changes in the company structure, etc.). For example, some multinational companies may have thousands of associated companies around the world. Managing the data may involve collaboration between large number of users and teams. The collaborative system may be configured to allow data management by multiple users. For instance, when one company is to be acquired by another company then an integration has to be made which may involve a large number of teams and users working on the data. The newly acquired companies have to be given a place in the current structure. For instance, some companies may shut down, certain companies may merge, certain companies may continue operation, etc. The collaborative system according to the invention allows for efficient management of the data. It will be appreciated that various other applications are possible.

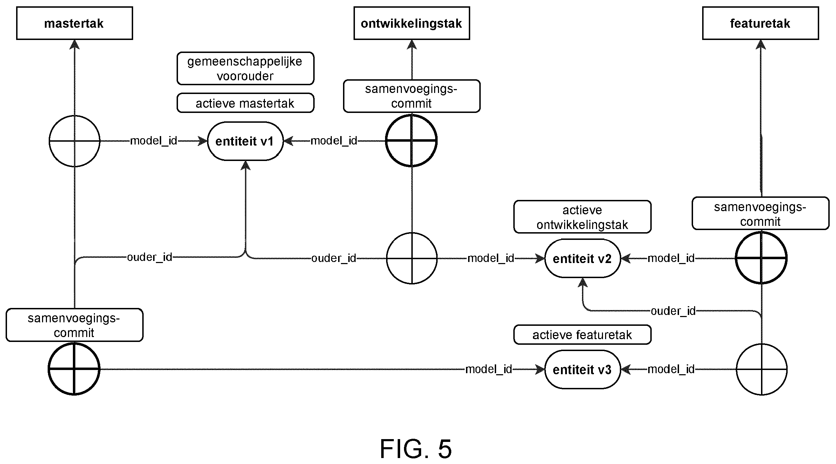

Fig. 5 shows a schematic diagram of an exemplary version control resulting in nonlinear history across branches.

The version control unit may be able to build a history tree structure for each data point in the relational database. Branches in the tree structure may branch off further into sub-branches. The master branch may have a first version (entity V1). In branch development, the data point can be adjusted to a second version (entity V2). In the feature branch, another change may have been carried out resulting in a third version (entity V3). The changes can be merged with the master branch. In this example, the second version is only detectable via the third version on the feature branch. The third version has parent id version 2, which is on branch development with parent id version 1. Each of the three branches may be associated with a row in the relational database. The entity V1 may be a row in the relational database which has a certain version. In this example, the second version can be seen as an intermediate version where further edits have been made in the third version (i.e. third version is derived from the second version). The third version in the feature branch may be merged with the master. The version control unit may be configured to determine whether there are conflicts and what has changed when performing a merge operation. For this purpose, a common ancestor between two branches can be determined. In this simplified example, the common ancestor is entity V1.

This example illustrates the complexity of tracking nonlinear history across branches. Three branches are shown in this example namely a master branch (SSoT), a develop branch and a feature branch. In this example, one object in the database (i.e. entity) has been changed. A User X aims to merge version 3, v3, that sits on the feature branch with the master using a merge commit. To do this, the version control system identifies the (first) common ancestor (i.e. v1). This version, however, is not held on the feature branch, which instead holds v3.

The version control unit may be configured to trace common ancestors across branches. In the shown figure, model_id refers to version_id of the commit on which the branch sits; the parent_id informs where the previous version started from. In some examples, instead of showing the entire version history tree, the version control unit may be adapted to show the linear history starting from the first common ancestor with the master branch to the leaf node of the branch where information is stored on the pointer.

Merkle trees may be employed for identifying where a change has been made. However, such Merkle trees do not inform what has been changed. To this end, the version control unit may be configured to determine the common ancestor. Advantageously, the common ancestor detection enables to identify the last common version of two branched versions. This may require to travel back in the branch history of different branches (cf. versions).

Every data point follows its own history tree, and it is thus already known which datapoints have changed when comparing two branches. However, employing hashes to compare changes might still be valuable since for example both branches could have independently applied the same change to a datapoint which means this datapoint may be ignored as a potential conflict.

The version control unit may be configured to identify conflicts between branches. For example, a conflict may arise as a result of automated pull requests, wherein the operational branch is updated with information from master, or with changes applied in parallel branches.

Optionally, the version control unit is configured to enable 'merge previews'. In this way, advantageously, potential conflicts can be better identified or prevented.

In addition to detecting changes and detecting potential conflicts, the version control unit may be configured to process and resolve the identified conflicts. This can be carried out in different ways.

Optionally, the version control unit is configured to develop a separate 'conflict' model that enables users to resolve individual conflicts on the same database row in a step-by-step fashion. When the one or more conflicts have been resolved, the merge can take place.

Optionally, the version control unit is configured to lock branches when a conflict arises. In a centralized version control, locking a branch may affect all users, which may be undesirable. Advantageously, in some examples, the version control unit enables user-based locking in the centralized collaborative system. This can for instance be done by creating temporary merge branches.

An application programming interface (API) may be provided allowing for the user to design, configure, modify the orchestration model without using the graphical user interface (GUI). In some examples, any action that can be taken using the GUI can be executed using the API, but the API optionally allows for additional user-generated logic. Further, in some examples, an API client may be provided allowing the user to interact with the API. Additionally or alternatively, the user can interact with the API by means of a programming language, such as for example Python. Additionally or alternatively, the user can interact with the API via the terminal of their computer by using a command line program. It will be appreciated that API commands can be chained together to form an API script. In this way, the automation and integration of various service features can be enabled. The API may offer various advantages over the GUI via programmatic access and automation, allowing for the creation of complex processes and workflows that would not be practicable or cost efficient to implement as a GUI feature. The API may be used for generating events.

Though the API has many advantages over other modes of interaction, it may lack several benefits conferred using the GUI. For example, The API may not be accessible to users having insufficient programming expertise. In some cases, the API includes features not present in the GUI, those interacting with the service only with its GUI are unable to take advantage of the advanced features. In some advantageous examples, the user can use a combination of a GUI and a programming language for interacting with the orchestration model for the infrastructure.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

It will be appreciated that using a 'cloud' may involve acquiring computational/network/storage resources and higher computation services (like database services) over the internet.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

The invention is defined by the features of the independent claims. Further embodiments are the subject-matter of the dependent claims.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A collaborative system (1) for multi-user data management, the system comprising:
a relational database (3) having a plurality of data points;
a communication interface (5) configured to allow users to query the relational database; and
a version control unit (7) configured to keep track of successive historic versions of each data point of the plurality of data points in the relational database; and
wherein the version control unit is configured to support parallel workflows with a plurality of version branches. **characterised by**,
wherein the communication interface is configured to provide isolated sandbox environments for carrying out changes to at least one data point, wherein each isolated sandbox environment is associated to one version branch, wherein the version control unit is configured to detect changes between version branches; and
wherein the version control unit is configured to detect changes to data points in one or more higher level branches, and automatically apply the changes to the data points in the one or more higher level branches to data points in one or more lower level branches.

2. The collaborative system according to claim 1, wherein the version control unit is configured to store the historic versions of each data point of the plurality of data points in said relational database, wherein metadata is associated to each historic version, the meta data including at least a user identification, a timestamp, and a parent version from which the historic version was created.

3. The collaborative system according to claim 1 or 2, wherein the historic versions of each data point of the plurality of data points stored in the relational database are queryable.

4. The collaborative system according to any one of the preceding claims, wherein the version control unit is configured to permit merging of version branches together.

5. The collaborative system according to any one of the preceding claims, wherein the version control unit is configured to perform a validity check when a merge between version branches is initiated, wherein version control unit is configured to check whether the transition to a merged branch is allowable.

6. The collaborative system according to any one of the preceding claims, wherein the version control unit is configured to associate, for each data point, a history tree containing history information relating to a change path which has been performed in order to arrive to a latest version of the respective data point.

7. The collaborative system according to any one of the preceding claims 4-6, wherein upon merging of a first version branch into second version branch, the version control unit is configured to identify a common ancestor of the first and second version branches, wherein the common ancestor is a last common version of the first version branch and the second version branch, wherein the version control unit is configured to determine based on the common ancestor which columns of the data point have been changed and whether merging conflicts exists.

8. The collaborative system according to claim 7, wherein identifying the common ancestor of a data point in the first and second version branches includes recursively going through the version history of that respective data point, starting from both the version in the first and second branch until commonly shared version is encountered.

9. The collaborative system according to claim 6 or 7, wherein the version control unit is configured to trace common ancestors across all version branches.

10. The collaborative system according to any one of the preceding claims, wherein the plurality of data points are reconfigurable to a selected earlier historic version by means of the version control unit, wherein the version control unit is configured to provide a rollback functionality, wherein in response to a rollback event, the version control unit is configured to perform a rollback transition by restoring at least one data point of the plurality of data points to an earlier version of the historic versions of said at least one data point.

11. The collaborative system according to any one of the preceding claims, wherein the relational database is a centralized database.

12. A method for providing a collaborative platform for multi-user data management, the method comprising:
providing a relational database having a plurality of data points;
providing a communication interface for allowing users to query the relational database; and
providing a version control unit for keeping track of successive historic versions of each data point of the plurality of data points in the centralized relational database; and
wherein the version control unit is configured to support parallel workflows with a plurality of version branches. **characterised by**,
wherein the communication interface is configured to provide isolated sandbox environments for carrying out changes to at least one data point, wherein each isolated sandbox environment is associated to one version branch, wherein the version control unit is configured to detect changes between version branches; and
wherein the version control unit is configured to detect changes to data points in one or more higher level branches, and automatically apply the changes to the data points in the one or more higher level branches to data points in one or more lower level branches.

13. A computer program configured for performing, when run on a computing unit, the steps of the method according to claim 12.

14. A device comprising a computing unit including a processor coupled to a memory operable to cause the computing unit to carry out the method according to claim 12.

## Patentansprüche

1. Kollaboratives System (1) für Mehrbenutzer-Datenverwaltung , wobei das System Folgendes umfasst:
eine relationale Datenbank (3) mit einer Vielzahl von Datenpunkten;
eine Kommunikationsschnittstelle (5), die so konfiguriert ist, dass sie Benutzern die Abfrage der relationalen Datenbank ermöglicht; und
eine Versionskontrolleinheit (7), die so konfiguriert ist, dass sie aufeinanderfolgende historische Versionen jedes Datenpunktes der Vielzahl von Datenpunkten in der relationalen Datenbank verfolgt; und
wobei die Versionskontrolleinheit so konfiguriert ist, dass sie parallele Arbeitsabläufe mit einer Vielzahl von Versionszweigen unterstützt, **dadurch gekennzeichnet, dass** die Kommunikationsschnittstelle so konfiguriert ist, dass sie isolierte Sandbox-Umgebungen zum Ausführen von Änderungen an mindestens einem Datenpunkt bereitstellt, wobei jede isolierte Sandbox-Umgebung einem Versionszweig zugeordnet ist, wobei die Versionskontrolleinheit so konfiguriert ist, dass sie Änderungen zwischen Versionszweigen erkennt; und
wobei die Versionskontrolleinheit so konfiguriert ist, dass sie Änderungen an Datenpunkten in einem oder mehreren Zweigen höherer Ebene erkennt und die Änderungen an den Datenpunkten in dem einen oder mehreren Zweigen höherer Ebene automatisch auf Datenpunkte in einem oder mehreren Zweigen niedrigerer Ebene anwendet.

2. Kollaboratives System nach Anspruch 1, wobei die Versionskontrolleinheit so konfiguriert ist, dass sie die historischen Versionen jedes Datenpunktes der Vielzahl von Datenpunkten in der relationalen Datenbank speichert, wobei jeder historischen Version Metadaten zugeordnet sind, wobei die Metadaten mindestens eine Benutzeridentifikation, einen Zeitstempel und eine Vorgängerversion, von der die historische Version erstellt wurde, enthalten.

3. Kollaboratives System nach Anspruch 1 oder 2, wobei die historischen Versionen jedes Datenpunktes der Vielzahl der in der relationalen Datenbank gespeicherten Datenpunkte abfragbar sind.

4. Kollaboratives System nach einem der vorhergehenden Ansprüche, wobei die Versionskontrolleinheit so konfiguriert ist, dass sie das Zusammenführen von Versionszweigen ermöglicht.

5. Kollaboratives System nach einem der vorhergehenden Ansprüche, wobei die Versionskontrolleinheit so konfiguriert ist, dass sie eine Gültigkeitsprüfung durchführt, wenn eine Zusammenführung zwischen Versionszweigen eingeleitet wird, wobei die Versionskontrolleinheit so konfiguriert ist, dass sie prüft, ob der Übergang zu einem zusammengeführten Zweig zulässig ist.

6. Kollaboratives System nach einem der vorhergehenden Ansprüche, wobei die Versionskontrolleinheit so konfiguriert ist, dass sie für jeden Datenpunkt einen Verlaufsbaum zuordnet, der Verlaufsinformationen enthält, die sich auf einen Änderungspfad beziehen, der durchgeführt wurde, um zu einer letzten Version des jeweiligen Datenpunkts zu gelangen.

7. Kollaboratives System nach einem der vorangehenden Ansprüche 4 bis 6, wobei die Versionskontrolleinheit so konfiguriert ist, dass sie beim Zusammenführen eines ersten Versionszweigs in einen zweiten Versionszweig einen gemeinsamen Vorgänger des ersten und des zweiten Versionszweigs identifiziert, wobei der gemeinsame Vorgänger eine letzte gemeinsame Version des ersten Versionszweigs und des zweiten Versionszweigs ist, wobei die Versionskontrolleinheit so konfiguriert ist, dass sie auf der Grundlage des gemeinsamen Vorgängers bestimmt, welche Spalten des Datenpunkts geändert wurden und ob Zusammenführungskonflikte bestehen.

8. Kollaboratives System nach Anspruch 7, wobei das Identifizieren des gemeinsamen Vorgängers eines Datenpunktes im ersten und zweiten Versionszweig das rekursive Durchlaufen der Versionsgeschichte dieses jeweiligen Datenpunktes beinhaltet, beginnend sowohl mit der Version im ersten als auch im zweiten Zweig, bis eine gemeinsame Version angetroffen wird.

9. Kollaboratives System nach Anspruch 6 oder 7, wobei die Versionskontrolleinheit so konfiguriert ist, dass sie gemeinsame Vorgänger über alle Versionszweige hinweg verfolgt.

10. Kollaboratives System nach einem der vorhergehenden Ansprüche, wobei die Vielzahl von Datenpunkten mittels der Versionskontrolleinheit in eine ausgewählte frühere historische Version rekonfigurierbar ist, wobei die Versionskontrolleinheit so konfiguriert ist, dass sie eine Rollback-Funktionalität bereitstellt, wobei als Reaktion auf ein Rollback-Ereignis die Versionskontrolleinheit so konfiguriert ist, dass sie einen Rollback-Übergang durch Wiederherstellung mindestens eines Datenpunktes der Vielzahl von Datenpunkten in eine frühere Version der historischen Versionen des mindestens einen Datenpunktes durchführt.

11. Kollaboratives System nach einem der vorhergehenden Ansprüche, wobei die relationale Datenbank eine zentralisierte Datenbank ist.

12. Verfahren zur Bereitstellung einer kollaborativen Plattform für Mehrbenutzer-Datenverwaltung, wobei das Verfahren Folgendes umfasst:
Bereitstellung einer relationalen Datenbank mit einer Vielzahl von Datenpunkten;
Bereitstellung einer Kommunikationsschnittstelle, über die Benutzer die relationale Datenbank abfragen können; und
Bereitstellung einer Versionskontrolleinheit zur Verfolgung aufeinanderfolgender historischer Versionen jedes Datenpunktes der Vielzahl von Datenpunkten in der zentralisierten relationalen Datenbank; und
wobei die Versionskontrolleinheit so konfiguriert ist, dass sie parallele Arbeitsabläufe mit einer Vielzahl von Versionszweigen unterstützt, **dadurch gekennzeichnet,**
**dass** die Kommunikationsschnittstelle so konfiguriert ist, dass sie isolierte Sandbox-Umgebungen zum Ausführen von Änderungen an mindestens einem Datenpunkt bereitstellt, wobei jede isolierte Sandbox-Umgebung einem Versionszweig zugeordnet ist, wobei die Versionskontrollvorrichtung so konfiguriert ist, dass sie Änderungen zwischen Versionszweigen erkennt; und
wobei die Versionskontrolleinheit so konfiguriert ist, dass sie Änderungen an Datenpunkten in einem oder mehreren Zweigen höherer Ebene erkennt und die Änderungen an den Datenpunkten in dem einen oder mehreren Zweigen höherer Ebene automatisch auf Datenpunkte in einem oder mehreren Zweigen niedrigerer Ebene anwendet.

13. Computerprogramm, das so konfiguriert ist, dass es, wenn es auf einer Computereinheit ausgeführt wird, die Schritte des Verfahrens nach Anspruch 12 durchführt.

14. Vorrichtung, die eine Computereinheit umfasst, die einen mit einem Speicher gekoppelten Prozessor enthält, der die Computereinheit veranlassen kann, das Verfahren nach Anspruch 12 auszuführen.

## Revendications

1. Système collaboratif (1) pour la gestion de données multi-utilisateurs, le système comprenant :
une base de données relationnelle (3) ayant une pluralité de points de données ;
une interface de communication (5) configurée pour autoriser des utilisateurs à interroger la base de données relationnelle ; et
une unité de contrôle de version (7) configurée pour garder une trace de versions historiques successives de chaque point de données de la pluralité de points de données dans la base de données relationnelle ; et
dans lequel l'unité de contrôle de version est configurée pour prendre en charge des flux de travail parallèles avec une pluralité de branches de version, **caractérisé par**,
dans lequel l'interface de communication est configurée pour fournir des environnements de bac à sable isolés pour apporter des modifications à au moins un point de données, dans lequel chaque environnement de bac à sable isolé est associé à une branche de version, dans lequel l'unité de contrôle de version est configurée pour détecter des modifications entre branches de version ; et
dans lequel l'unité de contrôle de version est configurée pour détecter des modifications de points de données dans une ou plusieurs branches de niveau supérieur, et appliquer automatiquement les modifications des points de données dans les ou plusieurs branches de niveau supérieur à des points de données dans une ou plusieurs branches de niveau inférieur.

2. Système collaboratif selon la revendication 1, dans lequel l'unité de contrôle de version est configurée pour stocker les versions historiques de chaque point de données de la pluralité de points de données dans ladite base de données relationnelle, dans lequel des métadonnées sont associées à chaque version historique, les métadonnées incluant au moins une identification d'utilisateur, un horodatage et une version parente à partir de laquelle la version historique a été créée.

3. Système collaboratif selon la revendication 1 ou 2, dans lequel les versions historiques de chaque point de données de la pluralité de points de données stockées dans la base de données relationnelle sont aptes à être interrogées.

4. Système collaboratif selon l'une quelconque des revendications précédentes, dans lequel l'unité de contrôle de version est configurée pour permettre une fusion de branches de version.

5. Système collaboratif selon l'une quelconque des revendications précédentes, dans lequel l'unité de contrôle de version est configurée pour réaliser une vérification de validité lorsqu'une fusion entre branches de version est initiée, dans lequel l'unité de contrôle de version est configurée pour vérifier si la transition vers une branche fusionnée est apte à être autorisée.

6. Système collaboratif selon l'une quelconque des revendications précédentes, dans lequel l'unité de contrôle de version est configurée pour associer, pour chaque point de données, un arbre d'historique contenant des informations d'historique relatives à un chemin de modification qui a été emprunté afin d'aboutir à une toute dernière version du point de données respectif.

7. Système collaboratif selon l'une quelconque des revendications 4 à 6, dans lequel lors de la fusion d'une première branche de version en une deuxième branche de version, l'unité de contrôle de version est configurée pour identifier un ancêtre commun des première et deuxième branches de version, dans lequel l'ancêtre commun est une dernière version commune de la première branche de version et de la deuxième branche de version, dans lequel l'unité de contrôle de version est configurée pour déterminer, sur la base de l'ancêtre commun, quelles colonnes du point de données ont été modifiées et si des conflits de fusion existent.

8. Système collaboratif selon la revendication 7, dans lequel l'identification de l'ancêtre commun d'un point de données dans les première et deuxième branches de version inclut le fait de parcourir, de manière récursive, l'historique des versions de ce point de données respectif, en commençant par la version à la fois dans les première et deuxième branches jusqu'à ce qu'une version partagée de manière commune soit rencontrée.

9. Système collaboratif selon la revendication 6 ou 7, dans lequel l'unité de contrôle de version est configurée pour retracer des ancêtres communs parmi toutes les branches de version.

10. Système collaboratif selon l'une quelconque des revendications précédentes, dans lequel la pluralité de points de données sont aptes à être reconfigurés vers une version historique plus ancienne sélectionnée au moyen de l'unité de contrôle de version, dans lequel l'unité de contrôle de version est configurée pour fournir une fonctionnalité de retour en arrière, dans lequel en réponse à un événement de retour en arrière, l'unité de contrôle de version est configurée pour réaliser une transition de retour en arrière par la restauration d'au moins un point de données de la pluralité de points de données vers une version plus ancienne des versions historiques dudit au moins un point de données.

11. Système collaboratif selon l'une quelconque des revendications précédentes, dans lequel la base de données relationnelle est une base de données centralisée.

12. Procédé pour la fourniture d'une plateforme collaborative pour la gestion de données multi-utilisateurs, le procédé comprenant :
la fourniture d'une base de données relationnelle ayant une pluralité de points de données ;
la fourniture d'une interface de communication pour autoriser des utilisateurs à interroger la base de données relationnelle ; et
la fourniture d'une unité de contrôle de version pour garder une trace de versions historiques successives de chaque point de données de la pluralité de points de données dans la base de données relationnelle centralisée ; et
dans lequel l'unité de contrôle de version est configurée pour prendre en charge des flux de travail parallèles avec une pluralité de branches de version, **caractérisé par**,
dans lequel l'interface de communication est configurée pour fournir des environnements de bac à sable isolés pour apporter des modifications à au moins un point de données, dans lequel chaque environnement de bac à sable isolé est associé à une branche de version, dans lequel l'unité de contrôle de version est configurée pour détecter des modifications entre branches de version ; et
dans lequel l'unité de contrôle de version est configurée pour détecter des modifications de points de données dans une ou plusieurs branches de niveau supérieur, et appliquer automatiquement les modifications des points de données dans les ou plusieurs branches de niveau supérieur à des points de données dans une ou plusieurs branches de niveau inférieur.

13. Programme d'ordinateur configuré pour la réalisation, lors de son exécution sur une unité informatique, des étapes du procédé selon la revendication 12.

14. Dispositif comprenant une unité informatique incluant un processeur couplé à une mémoire servant à amener l'unité informatique à mettre en œuvre le procédé selon la revendication 12.
